# EUROPÄISCHE PATENTSCHRIFT

(11) **EP 1 351 752 B1**
(45) Veröffentlichungstag und Bekanntmachung des Hinweises auf die Patenterteilung: **06.04.2005**
(21) Anmeldenummer: 02700200.5
(22) Anmeldetag: 12.01.2002
(51) Int. Cl.: B01D 39/20

(54) **GRADIERT AUFGEBAUTE FILTER UND VERFAHREN ZU IHRER HERSTELLUNG**
FILTERS WITH A GRADUATED STRUCTURE AND A METHOD FOR PRODUCING THE SAME
FILTRES A STRUCTURE GRADUEE ET LEUR PROCEDE DE FABRICATION

(30) Priorität: 19.01.2001 DE 10102295
(43) Veröffentlichungstag der Anmeldung: 15.10.2003
(73) Patentinhaber: GKN Sinter Metals GmbH, 42477 Radevormwald (DE); FORSCHUNGSZENTRUM JÜLICH GMBH, 52425 Jülich (DE)
(72) Erfinder: NEUMANN, Peter, 58706 Menden (DE); STEIGERT, Simon, 58706 Menden (DE); LI, Zi, 42369 Wuppertal (DE); BRAM, Martin, 52438 Jülich (DE); BRUCHKREMER, Hans-Peter, 52525 Heinsberg (DE); ZHAO, Li, 57076 Siegen (DE)
(74) Vertreter: Geskes, Christoph, Dr.
(86) Internationale Anmeldenummer: PCT/EP2002/000232
(87) Internationale Veröffentlichungsnummer: WO 2002/062450

(56) Entgegenhaltungen:
- EP-A- 0 344 961
- EP-A- 0 381 812
- WO-A-99/56899
- US-A- 5 342 431

## Beschreibung

Die vorliegende Erfindung betrifft gradiert aufgebaute Filter, hergestellt aus sinterfähigem Material aus mindestens drei Schichten unterschiedlicher Porengröße, sowie ein Verfahren zur Herstellung derselben und deren Verwendung.

Zur Herstellung gesinterter Filterkörper ist es bekannt, zunächst zur Herstellung eines sogenannten Grünkörpers Gemische aus Metallpulver und Bindemitteln herzustellen und diese Gemische unter Druck von bis zu einigen 1000 bar in die gewünschte Form zu pressen. Anschließend werden die dermaßen hergestellten Grünkörper bei Temperaturen bis über 1.000°C gesintert. Auf diese Art und Weise können jedoch lediglich grobporöse Filterkörper sinnvoll hergestellt werden. Die Herstellung von Feinfiltern mit definierten Porengrößen würde Produkte mit sehr geringen Permeabilitäten bringen, so daß sie praktisch unbrauchbar sind.

Es besteht jedoch ein Bedarf an sehr feinporigen Filterkörpern. Zur Herstellung solcher feinporiger Filterkörper ist es notwendig, besonders feine Metallpulver zu verwenden, deren Partikelgrößen im Manometer-Bereich liegen. Die Verwendung derartiger Metallpartikel ist jedoch problematisch, da diese einerseits leicht entzündlich sowie andererseits besonders stark einer möglichen Oxidation ausgesetzt sind. Daher können derartige Metallpulver technisch nur äußerst schwierig und aufwendig gehandhabt werden. Zudem sind sie kommerziell für größere Mengen nicht erhältlich.

Ein weiteres Problem feinporiger Filterkörper ist, daß je feinporiger ein Filterkörper ist, desto höher dessen Strömungswiderstand ist. Hohe Strömungswiderstände sind jedoch beim praktischen Gebrauch von Filtern, beispielsweise in chemischen Anlagen, unerwünscht, da dann höhere Drücke und damit mehr Energie benötigt wird.

Der vorliegenden Erfindung liegt daher die Aufgabe zugrunde, gradiert aufgebaute Filter zur Verfügung zu stellen, welche die vorstehend genannten Nachteile nicht aufweisen.

Diese Aufgabe wird durch einen gradiert aufgebauten Filter, hergestellt aus sinterfähigem Material aus mindestens zwei Schichten unterschiedlicher Porengröße, gelöst, wobei eine erste Schicht eine Porengröße in einem Bereich von 0,01 µm bis etwa 1 µm und eine Schichtdicke in einem Bereich von etwa 0,5 bis 50 µm aufweist und aus Metalloxid oder Mischungen solcher hergestellt ist, wobei die zweite Schicht aus einem metallischen Material hergestellt ist und eine Schichtdicke in einem Bereich von 5 bis 300 µm aufweist, und wobei die dritte Schicht aus einem grobporösen Trägerkörper aus einem metallischen Material besteht, wobei die Eindringtiefe des Metalloxidmateriales der ersten Schicht in die zweite Schicht in einem Bereich von ein bis fünf Porenlagen liegt und die Porengröße der ersten Schicht 1/3 bis 1/6 von derjenigen der zweiten Schicht beträgt.

Die erfindungsgemäßen Filter weisen vorteilhafterweise definierte Übergänge zwischen den mindestens zwei vorhandenen Schichten auf. Definierter Übergang im Sinne der Erfindung bedeutet, daß der Übergangsbereich zwischen insbesondere der ersten und der zweiten Schicht schmal ist, wobei dessen Breite eingestellt werden kann. Bevorzugt liegt die Breite des Übergangsbereiches zwischen der ersten (Metalloxid)-Schicht und der zweiten Schicht, oder anders ausgedrückt, die Eindringtiefe des Metalloxid-Materials in die großporige zweite Schicht, in einem Bereich von 2 Porenlagen. Es ist mit den erfindungsgemäßen Filtern vorteilhaft möglich, über die vorgenannten Parameter gradierte Filter mit definiertem Strömungswiderstand herzustellen. Derartig aufgebaute gradierte Filter weisen für Gase, beispielsweise luft, bei einem Differenzdruck von etwa 100 Millibar Durchflußraten von 1 bis 1.500 m³/hm² auf. Für Flüssigkeiten, beispielsweise Wasser, ergeben sich bei gleichen Differenzdruck-Durchflußraten von etwa 10 bis 30m³/hm². Der Permeabilitätskoeffizient beträgt etwa 0,002 x 10⁻¹² bis 3 x 10⁻¹² m² bei einer Gesamt-Schichtdicke von kleiner als 100 µm, gemessen nach DIN ISO 4022. Sie weisen einen Bubble-Point-Druck in einem Bereich von etwa 8 x 10⁶ bis 2 x 10³ Pa, besonders bevorzugt in einem Bereich von etwa 8,6 x 10⁶ bis 1,72 x 10³ Pa, ermittelt nach DIN 30 911, auf. Die verwendeten Metalloxide sind einfach zu verarbeiten, da diese in feinverteilter Form nicht zur Entzündung bzw. weiteren Oxidationen neigen. Zudem sind sie als Massenprodukte verfügbar. Daher können die erfindungsgemäßen gradierten Filter kostengünstig hergestellt werden.

Die zweite Schicht weist bevorzugt eine Schichtdicke in einem Bereich von 5 bis 20µm auf. Die zu der Herstellung von der zweiten Schicht verwendeten metallischen Pulver weisen noch Partikelgrößen auf, welche bei der Herstellung der Schicht problemlos verwendet werden können. Die Korngröße und damit der Durchmesser der hierbei einsetzbaren Pulverpartikel liegt in einem Bereich von etwa 0,05µm bis 150µm, vorzugsweise in einem Bereich von 0,5µm bis 100µm, noch mehr bevorzugt in einem Bereich von 0, 5µm bis 6µm. Demgegenüber weisen die zu der Herstellung der ersten Schicht verwendeten Metalloxid-Pulver Partikelgrößen mit einer Korngröße in einem Bereich von etwa 0, 001µm bis 0,1µm, bevorzugt 0,01 bis 0,3µm, auf. Bevorzugt weisen die gradiert aufgebauten Filter eine in Durchströmrichtung abnehmende PorengröBe auf, d.h. die aus Metalloxid hergestellte Schicht ist einströmungsseitig angeordnet.

Unter 'sinterfähigen Materialien', welche für die zweite, mit der ersten Schicht verbundene Schicht verwendet werden können, werden Pulver oder Fasern oder Drähte verstanden, hergestellt aus Metallen, Keramiken und/oder Kunststoffen. Verwendbare metallische Materialien sind nicht nur Pulver aus reinen Metallen, sondern auch Pulver aus Metall-Legierungen und/oder pulvermischungen aus unterschiedlichen Metallen und Metall-Legierungen. Hierzu gehören insbesondere Stähle, vorzugsweise Chrom-Nickel-Stähle, Bronzen, Nickelbasislegierungen wie Hastalloy, Inconel oder dergleichen, wobei Pulvermischungen auch hochschmelzende Bestandteile enthalten können, wie beispielsweise Platin oder dergleichen. Das verwendete Metallpulver und seine Teilchengröße ist vom jeweiligen Einsatzzweck abhängig. Bevorzugte Pulver sind die Legierungen 316 L, 304 L, Inconel 600, Inconel 625, Monel und Hastalloy B, X und C.

Erfindungsgemäß weist die erste Schicht der gradiert aufgebauten Filter vorzugsweise eine Porengröße in einem Bereich von etwa 0,05µm bis 0,6µm auf. Die Schichtdicke dieser ersten Schicht soll in einem Bereich von etwa 0,5 bis 10µm liegen. Denn je dünner die erste Schicht, um so geringer ist der bei der vorhandenen geringen Porengröße auftretende Strömungswiderstand für Gase und/oder Flüssigkeiten.

Vorzugsweise ist das Metalloxid oder Mischungen solcher ausgewählt aus einer Gruppe umfassend reduzierbare und/oder nicht reduzierbare Metalloxide. Reduzierbare Oxide im Sinne der vorliegenden Erfindung sind Metalloxide, welche in reduzierender Wasserstoff-Atmosphäre zum jeweiligen Metall reduzierbar sind. Bevorzugt hierbei sind Metalloxide oder Mischungen solcher ausgewählt aus einer Gruppe umfassend AgO, CuO, Cu₂O, Fe₂O₃, Fe₃O₄ und/oder NiO. Schwer reduzierbare Oxide im Sinne der vorliegenden Erfindung sind demgegenüber Oxide, welche mit technischen Atmosphären, insbesondere Wasserstoff, nicht reduziert werden können. Bevorzugt hierbei sind Oxide ausgewählt aus einer Gruppe umfassend TiO₂, Al₂O₃, ZrO₂, Cr₂O₃, MgO, CaO und/oder SiO₂.

Wird die erste Schicht der erfindungsgemäßen Filter aus schwer reduzierbaren Metalloxiden hergestellt, so besteht diese nach dem Sinterprozeß aus dem betreffenden Metalloxid.

Die Partikelform der eingesetzten nicht reduzierbaren Metalloxide bleibt im Sinterprozeß erhalten.

Zwischen der ersten Schicht und der zweiten Schicht ist eine Mischoxid-Schicht angeordnet. Diese kann durch Festkörperreaktionen mit der Oxidhaut der zweiten Metallschicht ausgebildet werden, wodurch die Haftung der Oxidschicht an den Untergrund gewährleistet wird. Die Filtereigenschaften bleiben dadurch unbeeinflußt. Derartige gradierte Filter mit einer ersten Schicht aus nicht reduzierbaren Metalloxiden weisen hervorragende Eigenschaften betreffend den Durchflußwiderstand aufgrund der genau definierten Übergangsbereiche auf, andererseits weisen sie auch hervorragende Werte hinsichtlich der Duktilität und Schlagbeständigkeit auf, wofür der metallische Trägerkörper (dritte Schicht) im wesentlichen verantwortlich ist. Auf diese Weise ist es möglich, langlebige und rückspülbare gradierte Filter zur Verfügung zu stellen. Deren Zugfestigkeit liegt bevorzugt in einem Bereich von etwa 5 bis 500 N/mm², bevorzugt 20 bis 400 N/mm², gemessen in Anlehnung an DIN EN 309116. Zusätzlich sind mit den erfindungsgemäßen Filtern aufgrund der guten Haftung der ersten mit der zweiten Schicht Drücke bei der Rückspülung von bis zu 8 bar möglich, was mit Kunststoffmembranen nicht erreichbar ist.

Ist die erste Schicht aus reduzierbaren Metalloxiden hergestellt, so erfolgt im Sinterprozeß in reduzierender Wasserstoff-Atmosphäre eine Reduktion derselben zum jeweiligen Metall. Hierdurch ist es möglich, auf einfache Art und Weise reinmetailische, gradierte Filter insbesondere für die Mikrofiltration zur Verfügung zu stellen, wenn die weitere (zweite) Schicht und der Trägerkörper (dritte Schicht) ebenfalls aus metallischen Pulvern hergestellt wurden.

Weiterhin betrifft die vorliegende Erfindung ein Verfahren zur Herstellung der erfindungsgemäßen gradiert aufgebauten Filter, wobei in einem ersten Schritt eine Metalloxide enthaftende Suspension mit einer Viskosität in einem Bereich von 0,003 bis 0,96 Pas auf eine bestehende Schicht aus einem metallischen Material, welche mit einem die dritte Schicht bildenden grobporösen Trägerkörper aus einem metallischen Material in Verbindung steht, aufgebracht und anschließend in einem zweiten Schritt gesintert wird. Das Aufbringen der Schicht kann hierbei in Form von Gießen, Siebdruck oder Eintauchen in die Suspension oder Aufsprühen erfolgen. Bevorzugt erfolgt die Aufbringung jedoch durch Aufsprühen der Metalloxid enthaltenden Suspension.

Weiterhin wird auch die bereits bestehende Schicht durch Aufsprühen einer sinterfähige Materialien enthaltenden Suspension durch anschließendes Sintern derselben bevorzugt hergestellt.

Die für die Aufbringung der Metalloxid bzw. sinterfähige Materialien enthaltenden Suspension verwendete Methode wird hier 'Naßpulverspritzen' genannt. Hierbei wird eine Suspension des jeweiligen Metalloxids bzw. sinterfähigen Materials verwendet, welche noch Lösemittel sowie weitere Hilfssubstanzen umfaßt. Hierbei liegt das Mischungsverhältnis zwischen einerseits dem Metalloxid bzw. sinterfähigen Material und dem in der Suspension verwendeten Lösemittel bevorzugt etwa bei 2:3. Die Aufbringung der Suspension kann mit einer modifizierten Sprühpistole erfolgen, die auf einem X-Y-Bewegungssystem montiert ist. Nach Aufbringung der Suspension wird das Lösemittel verdampft, bzw. es verdampft aufgrund seines geringen Dampfdruckes von selbst, und anschließend wird die jeweilige Schicht gesintert.

Durch Verwendung der Methode des Naßpulverspritzens wird vorteilhafterweise erreicht, daß nur ein geringer Volumenanteil an Bindemitteln verwendet werden kann, so daß eine offene Struktur zwischen den Teilchen der Schicht vorliegt. Dies gewährleistet, daß im nach Aufbringung der Suspension folgenden Sinterprozeß die entstehenden Gase den sich zersetzenden Binder vollständig, da unbehindert, aus dem Grünkörper entfernen.

Der Sinterprozeß umfaßt im wesentlichen zwei Schritte, und zwar einerseits in einem ersten Schritt die Entbinderung des verwendeten Bindemittels und im weiteren Schritt den eigentlichen Sinterprozeß. Der Entbinderungsprozeß selbst ist nicht auf bestimmte Zeit-Temperatur-Programme beschränkt. Typischerweise wird in einem Entbinderungsprozeß der Grünkörper schrittweise auf eine Temperatur in einem Bereich von 280 bis 420°C bei einer Rate von 3 bis 10°C/min aufgeheizt und in Abhängigkeit von der Größe des Filterkörpers für eine bestimmte Zeitspanne auf dieser Temperatur so lange gehalten, bis das Bindemittel vollständig entfernt ist. Hierauf wird anschließend der gradierte Sinterkörper schrittweise weiter aufgeheizt, bis die notwendigen Sintertemperaturen von 800°C bis 1.250°C erreicht sind, die vom Material und dessen Korngröße abhängig sind.

Sowohl der Entbinderungsprozeß als auch der eigentliche Sinterprozeß werden im Falle der Verwendung reduzierbarer Oxide unter Schutzgas (wie H₂, N₂, Ar und/oder Gemisch dieser) oder im Vakuum durchgeführt.

Vorzugsweise wird bei dem erfindungsgemäßen Verfahren die bestehende Schicht vor dem Aufbringen der ersten Schicht mechanisch geglättet. Die Glättung kann hierbei durch mechanisches Nachdrücken mittels beispielsweise eines Kalanders erfolgen. Auch kann eine Kalibrierung durch einfaches Walzen vorgesehen sein. Darüber hinaus kann auch der Trägerkörper vor Aufbringung der bestehenden Schicht mechanisch geglättet werden. Die mechanische Glättung hat den Vorteil, daß hierdurch die Hafteigenschaften der ersten Schicht auf der weiteren Schicht verbessert werden.

Bevorzugt umfaßt die Metalloxid enthaltende Suspension weiterhin Lösemittel, Bindemittel, Stabilisatoren und/oder Dispergiermittel. Besonders bevorzugte Lösemittel sind ausgewählt aus einer Gruppe umfassend Wasser, Methanol, Ethanol, Isopropanol, Terpene, C₂-C₅-Alkene, Toluol, Trichlorethylen, Diethylether und/oder C₁-C₆-Aldehyde und/oder Ketone. Bevorzugt sind hierbei Lösemittel, die bei Temperaturen unter 100°C verdampfbar sind. Die Menge der verwendeten Lösemittel liegt in einem Bereich von etwa 40 bis 70 Gew%, bezogen auf das eingesetzte sinterfähige Material bzw. Metalloxid, bevorzugt in einem Bereich von etwa 50 bis 65 Gew%. Bevorzugt wird das Lösemittel derart ausgewählt, daß die bei der Aufbringung mittels Sprühens sich bildenden Sprühtropfen nicht schon teilweise bis vollständig während des Sprühvorganges selbst vor Kontakt mit der bestehenden Schicht bzw. Trägerkörper austrocknen. Bevorzugt werden daher Mischungen von Lösemitteln eingesetzt. Bevorzugt hierbei sind Mischungen aus Alkoholen mit Terpenen, insbesondere von Ethanol mit Terpineol, insbesondere solche mit Viskositäten in einem Bereich von etwa 0,006 bis etwa 0,016 Pas, oder aber Mischungen von Alkoholen mit niederen Ketonen, insbesondere Methylethylketon.

Das in der Metalloxid enthaltenden Suspension enthaltene Bindemittel ist bevorzugt ausgewählt aus einer Gruppe umfassend Polyvinylacetate, Wachse, Schellack, Polyethylenoxide und/oder Polyglycole. Polyalkylenoxide und ―glycole werden vorzugsweise als Polymere und/oder Copolymere mit mittleren Molekulargewichten in einem Bereich von 100 bis 500.000 g/mol, bevorzugt 1.000 bis 350.000 g/mol, weiter bevorzugt 5.000 bis 6.500 g/mol, verwendet. Die Bindemittel werden bevorzugt in einer Menge in einem Bereich von etwa 0,01 bis 12 Gew%, bevorzugt in einem Bereich von 2 bis 5 Gew%, jeweils bezogen auf die Gesamtmenge, eingesetzt. Besonders bevorzugt ist jedoch, die Aufbringung der Metalloxide enthaltenden Schicht binderfrei vorzunehmen. Hierdurch kann der gegebenenfalls notwendige Entbinderungsprozeß entfallen. Alternativ ist auch möglich, die Abscheidung der Partikel während des Sprühvorganges durch eine elektrostatische Aufladung des Körpers, auf den sie aufgebracht werden sollen, oder des Pulvers oder von beiden zu bewerkstelligen.

Die das Metalloxid enthaltende Suspension weist vorzugsweise einen Stabilisator auf, ausgewählt aus einer Gruppe umfassend organische und/oder anorganische Säuren, anorganische Laugen, Polyacrylamide, Polyacrylsäure und/oder Amine. Besonders bevorzugt sind hierbei Essigsäure, Zitronensäure, Salzsäure, Oxalsäure, Lithiumhydroxid, Ammoniumhydroxid, Triethandiamin und Tetramethylammoniumhydroxid. Besonders bevorzugt wird Essigsäure verwendet. Die Menge des eingesetzten Stabilisators liegt in einem Bereich von etwa 3 bis 13 Gew%, bezogen auf die Gesamtmenge, weiter bevorzugt in einem Bereich von 5 bis 8 Gew%. Durch den Zusatz der vorgenannten Stabilisatoren wird die Neigung der Feinoxid-Partikel zur Agglomeration abgeschwächt, wodurch eine gleichmäßigere Oberfläche und Porenverteilung erzielt wird.

weiterhin umfaßt die Metalloxid enthaltende Suspension bevorzugt Dispergiermittel, ausgewählt aus einer Gruppe umfassend Polyamine, Phthalsäureester und/oder Polyethylenimine. Besonders bevorzugt sind hierbei Polyamine, ausgewählt aus der Gruppe der Polyethylenimine. Durch Zugabe von Dispergiermitteln, insbesondere Polyethyleniminen, kann die Viskosität der zu sprühenden Metalloxid-Suspension optimal eingestellt werden. Bevorzugte Viskositäten der Suspensionen liegen in einem Bereich von etwa 0,005 bis etwa 0,008 Pas.

Mit Hilfe des erfindungsgemäßen Verfahrens ist es möglich, gradierte Filter herzustellen, welche hervorragende Eigenschatten hinsichtlich der Durchströmbarkeit aufweisen, insbesondere niedrige Strömungswiderstände, und zwar insbesondere aufgrund genau definierter Übergänge zwischen den jeweiligen schichten der gradierten Filter, sowie darüber hinaus derartige gradierte Filter gefahrlos herzustellen, da die Entzündungs- und Oxidationsgefahren so gut wie nicht mehr gegeben sind.

Die vorliegende Erfindung betrifft weiterhin die Verwendung gradierter Filter mit den vorstehend genannten Eigenschaften zur Filtration von Kühl-, Schmier- und Reinigungsmitteln, zur Feinstabtrennung von Katalysatorpartikeln, in Membranreaktoren, als Filterkerze und/oder Filterrohr, in der Lebensmittel- und Getränkeindustrie, Labortechnik, Medizintechnik, Umwelttechnik und/oder als Cross-Flow-Filter für die Mikrooder Ultrafiltration. Insbesondere finden die erfindungsgemäßen gradierten Filter Verwendung in Filterrohren und Filterkerzen, welche eine Länge von 10 mm bis 1.500 mm aufweisen können. Hierbei können die Filterkerzen auch Beschichtungen auf der Stirnseite aufweisen.

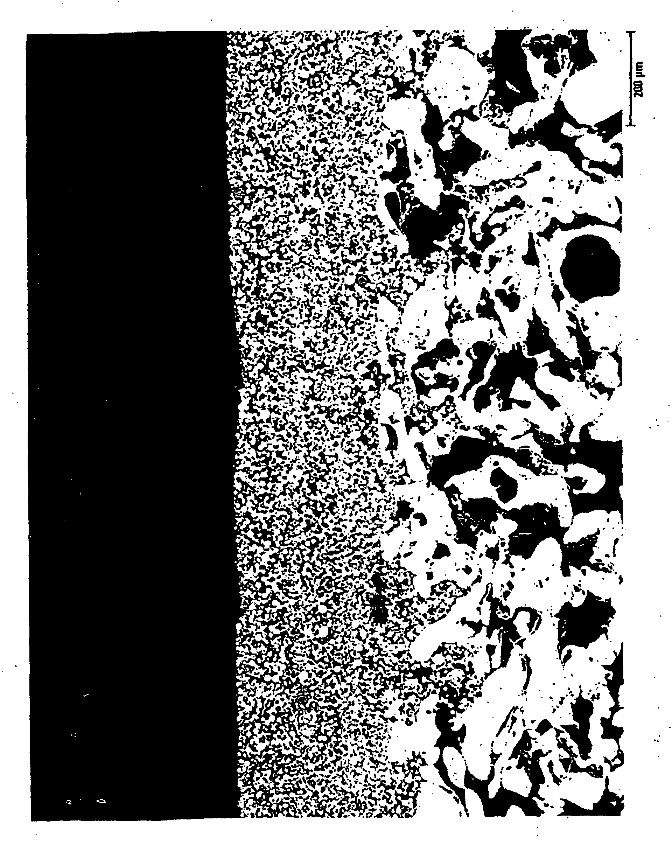

Diese und weitere Vorteile der Erfindung werden anhand der folgenden Zeichnung und Beispiele dargestellt. Es zeigt
- Fig. 1: eine stark vergrößerte Aufnahme eines Querschnittes durch einen erfindungsgemäßen Filter.

Fig. 1 zeigt einen insgesamt mit dem Bezugszeichen 1 bezeichneten erfindungsgemäßen Filter. Dieser weist eine erste Schicht 2 aus TiO₂ mit einer mittleren Korngröße von 0,45 µm, eine weitere gesinterte Schicht 3, hergestellt aus rostfreiem Stahl (Werkstoffbezeichnung 316L) mit einer mittleren Korngröße von kleiner 20 µm, sowie einen grobporösen Trägerkörper 4, hergestellt aus rostfreiem Stahl 316L mit einer mittleren Korngröße in einem Bereich von 86 µm bis 234 µm auf. Die Pulverpartikel der Schicht 2 dringen bis zu einer Tiefe von ca. 2 Porenlagen, entsprechend etwa 3 µm, in die Schicht 3 ein und bewirken so eine gute Verankerung der Schicht. Zwischen der ersten Schicht 2 und der weiteren Schicht 3 ist eine Mischoxid-Schicht, bestehend aus Cr_{0.12}T_{0.78}O₁₇₄ (ermittelt anhand eines Röntgenspektrums) mit einer Dicke von 2 Porenlagen angeordnet. Deutlich ist der sehr scharfe und definierte Übergang von der ersten Schicht 2 zu der weiteren Schicht 3 zu erkennen.

Ausgehend von einer Standardsuspension von Metalloxiden in einem Lösemittel, welche 40g TiO₂ und 60g Ethanol enthalten, wurden folgende Metalloxid-Suspensionen hergestellt:
1.:

| | |
|---|---|
| 40,0g | TiO₂ |
| 42,0g | Ethanol, |
| 18,0g | Terpineol. |

Bei der vorstehend genannten Suspension 1 ist sichergestellt, daß während des Aufsprühens der Metalloxidsuspension auf eine bestehende Schicht, welche auch ein Trägerkörper sein kann, nicht vor Kontakt mit derselben teilweise oder sogar vollständig austrocknet. Hierdurch wird insbesondere verhindert, daß die aufzutragende Metalloxid-Schicht unzusammenhängende Bereiche aufweist und daher unregelmäßig nach dem Sinterprozeß ausgebildet ist, womit eine ungleichmäßige Porosität über die gesamte Auftragsfläche einhergeht.
**2.:**

| | |
|---|---|
| 40,0g | TiO₂ |
| 3T,3g | Ethanol |
| 16,0g | Terpineol |
| 7,9g | Essigsäure |

Die Suspension 2 weist aufgrund des Zusatzes des Stabilisators Essigsäure so gut wie keinerlei Neigung zur Agglomeration der in dieser suspendierten feinen Metalloxidpartikel auf, so daß eine ausgesprochen gleichmäßige Verteilung derselben auf der zu besprühenden Schicht erzielt wird.
3.:

| | |
|---|---|
| 40,0g | TiO₂ |
| 37,3g | Ethanol |
| 16,0g | Terpineol |
| 6,7g | Essigsäure |
| 1,2g | Polyethylenimin. |

Die vorstehend genannte Suspension 3 weist eine optimale Viskosität in einem Bereich von etwa 0, 005 bis 0, 008 Pas auf, womit bei Aufbringung der Metalloxid-Suspension auf eine zweite Schicht mittels einer modifizierten Sprühpistole beste Ergebnisse hinsichtlich des Sprühprozesses erzielt wurden.

Hervorzuheben ist insbesondere, daß die Suspensionen 1 bis 3 bindemittelfrei sind. Hierdurch ist es vorteilhafterweise möglich, das erfindungsgemäße Verfahren ohne einen Entbinderungsprozeß durchzuführen, wodurch Kosten insbesondere dadurch eingespart werden, daß der Sinterprozeß schneller und einfacher erfolgen kann.

Die Suspensionen 1 bis 3 wurden auf eine mittels des Verfahrens des Naßpulverspritzens hergestellte zweite Schicht aufgesprüht. Die zweite Schicht bestand dabei aus einem Stahlpulver, welches einen mittleren Partikeldurchmesser von kleiner 5µm aufwies. Diese zweite Schicht wies eine Dicke von etwa 15µm auf. Die Sinterung der weiteren Schicht erfolgte bei Temperaturen von kleiner als 950°C im Sinterofen. Anschlie-Bend wurden die Metalloxid-Suspensionen 1 bis 3 mittels einer modifizierten Sprühpistole, welche an einem X-Y-Bewegungssystem montiert ist, auf die zweite Schicht aufgebracht. Die Schicht wurde über einen Zeitraum von 4 Stunden in einem Exsikkator getrocknet und anschließend in einem Bereich zwischen 800°C und 1.050°C, bevorzugt etwa 850°C bis 950°C, unter Schutzgas-Atmosphäre oder Vakuum gesintert.

Die mittels des erfindungsgemäßen Verfahrens hergestellten erfindungsgemäßen Filter weisen hervorragende Eigenschaften hinsichtlich der Durchströmbarkeit von Flüssigkeiten und/oder Gasen auf. Ursache ist hierfür insbesondere, daß zwischen der ersten und der zweiten Schicht ein genau definierter Übergangsbereich besteht, in welchem der Strömungswiderstand sprunghaft ansteigt. Dies hat seine Ursache darin, daß die Metalloxid-Partikel in der ersten Schicht nicht bei Aufbringung mittels des erfindungsgemäßen Verfahrens (Naßpulverspritzen ohne Bindemittel) in die offenen Poren der zweiten Schicht eindringen. Die zweite und weiteren Schichten können gegebenenfalls' unter Verwendung von Bindemitteln hergestellt sein.

## Patentansprüche

1. Gradiert aufgebauter Filter, hergestellt aus sinterfähigem Material aus mindestens drei Schichten unterschiedlicher Porengröße, wobei eine erste Schicht eine Porengröße in einem Bereich von 0,01 µm bis etwa 1 µm und eine Schichtdicke in einem Bereich von etwa 0,5 bis 50µm aufweist und aus Metalloxid oder Mischungen solcher hergestellt ist, wobei die zweite Schicht aus einem metallischen Material hergestellt ist und eine Schichtdicke in einem Bereich von 5 bis 300µm aufweist, und wobei die dritte Schicht aus einem grobporösen Trägerkörper aus einem metallischen Material besteht, wobei die Eindringtiefe des Metalloxidmateriales der ersten Schicht in die zweite Schicht in einem Bereich von ein bis fünf Porenlagen liegt und die Porengröße der ersten Schicht 1/3 bis 1/6 von derjenigen der zweiten Schicht beträgt.

2. Gradiert aufgebauter Filter gemäß Anspruch 1, **dadurch gekennzeichnet, dass** die erste Schicht eine Porengröße in einem Bereich von etwa 0,05µm bis 0,6µm aufweist.

3. Gradiert aufgebauter Filter gemäß einem der vorhergehenden Ansprüche, **dadurch gekennzeichnet, dass** das Metalloxid oder Mischungen solcher ausgewählt sind aus einer Gruppe umfassend reduzierbare und/oder schwer reduzierbare Metalloxide.

4. Gradiert aufgebauter Filter gemäß einem der vorhergehenden Ansprüche, **dadurch gekennzeichnet, dass** das Metalloxid oder Mischungen solcher schwer reduzierbare Oxide sind, ausgewählt aus einer Gruppe umfassend TiO₂, Al₂O₃.ZrO₂, Cr₂O₃, CaO, MgO und/oder SiO₂.

5. Gradiert aufgebauter Filter gemäß einem der Ansprüche 1 bis 4, **dadurch gekennzeichnet, dass** das Metalloxid oder Mischungen solcher reduzierbare Oxide sind, ausgewählt aus einer Gruppe umfassend AgO, CuO, Cu₂O, Fe₂O₃, Fe₃O₄ und/oder NiO.

6. Verfahren zur Herstellung eines gradiert aufgebauten Filters aus mindestens drei Schichten gemäß einem der Ansprüche 1 bis 5, wobei in einem ersten Schritt eine Metalloxid enthaltende Suspension mit einer Viskosität in einem Bereich von 0,003 bis 0,96 Pas auf eine bestehende Schicht aus einem metallischen Material, welche mit einem die dritte Schicht bildenden grobporösen Trägerkörper aus einem metallischen Material in Verbindung steht, aufgebracht und anschließend in einem zweiten Schritt gesintert wird.

7. Verfahren gemäß Anspruch 6, **dadurch gekennzeichnet, dass** die Aufbringung der Metalloxid enthaltenden Suspension durch Aufsprühen erfolgt.

8. Verfahren gemäß einem der Ansprüche 6 oder 7, **dadurch gekennzeichnet, dass** die bereits bestehende Schicht durch Aufsprühen einer sinterfähige Materialien enthaltenden Suspension und anschließendes Sintern dieser hergestellt wird.

9. Verfahren nach einem der Ansprüche 6 bis 8, **dadurch gekennzeichnet, dass** die bestehende Schicht vor dem Aufbringen der ersten Schicht mechanisch geglättet wird.

10. Verfahren nach einem der Ansprüche 6 bis 9, **dadurch gekennzeichnet, dass** die Metalloxid enthaltende Suspension weiterhin Lösemittel, Bindemittel, Stabilisatoren und/oder Dispergiermittel umfasst.

11. Verfahren nach einem der Ansprüche 6 bis 10, **dadurch gekennzeichnet, dass** das Lösemittel ausgewählt ist aus einer Gruppe umfassend Wasser, Methanol, Ethanol. Isopropanol, Terpene, C₂-C₅-Alkene, Toluol, Trichlorethylen, Diethylether und/oder C₁-C₆-Aldehyde und/oder Ketone.

12. Verfahren nach einem der Ansprüche 6 bis 11, **dadurch gekennzeichnet, dass** das Bindemittel ausgewählt ist aus einer Gruppe umfassend Polyvinylacetale, Wachse, Schellack, Polyethylenoxide und/oder Polyglykole.

13. Verfahren nach einem der Ansprüche 6 bis 12, **dadurch gekennzeichnet, dass** der Stabilisator ausgewählt ist aus einer Gruppe umfassend organische und/oder anorganische Säuren, anorganische Laugen, Polyacrylamide, Polyacrylsäuren und/oder Amine.

14. Verfahren nach einem der Ansprüche 6 bis 13, **dadurch gekennzeichnet, dass** das Dispergiermittel aus einer Gruppe ausgewählt ist umfassend Polyamine, Phthalsäureester und/oder Polyethylenimine.

15. Verwendung eines gradierten Filters gemäß einem der Ansprüche 1 bis 5 zur Filtration von Kühl-, Schmier- und Reinigungsmitteln, zur Feinstabtrennung von Katalysatorpartikein, in Membranreaktoren, als Filterkerze und/oder Filterrohr, in der Lebensmittel- und Getränkeindustrie, Labortechnik, Medizintechnik, Umwelttechnik und/oder als Cross-Flow-Filter für die Mikro- oder Ultrafiltration.

## Claims

1. A filter having a graduated structure, made from sinterable material, comprising at least three layers of different pore size, wherein the first layer has a pore size within a range of 0.01 µm to about 1 µm and a layer thickness within a range of about 0.5 µm to 50 µm and is made of a metal oxide or a mixture of metal oxides, wherein the second layer is made of a metallic material and has a layer thickness within a range of 5 µm to 300 µm, and wherein the third layer is comprised of a coarse porous supporting body formed of a metallic material, wherein the penetration depth of the metal oxide material of the first layer into the second layer ranges from one to five pore plies, and wherein the pore size of the first layer is 1/3 to 1/6 of the pore size of the second layer.

2. The filter having a graduated structure according to claim 1, **characterized in that** said first layer has a pore size within a range of about 0.05 µm to 0.6 µm.

3. The filter having a graduated structure according to one of the preceding claims, **characterized in that** said metal oxide or mixtures of metal oxides are selected from a group comprising reducible metal oxides and/or metal oxides that are difficult to reduce.

4. The filter having a graduated structure according to one of the preceding claims, **characterized in that** said metal oxide or mixtures of metal oxides are oxides that are difficult to reduce, selected from a group comprising TiO₂, Al₂O₃, ZrO₂, Cr₂O₃, CaO, MgO and/or SiO₂.

5. The filter having a graduated structure according to one of claims 1 through 4, **characterized in that** said metal oxide or mixtures of metal oxides are reducible oxides, selected from a group comprising AgO, CuO, Cu₂O, Fe₂O₃, Fe₃O₄ and/or NiO.

6. A method for producing a filter with a graduated structure of at least three layers according to one of claims 1 through 5, wherein in a first step a suspension containing metal oxide and having a viscosity within a range of 0.003 to 0.96 Pas is applied onto an existing layer comprised of a metallic material being in contact with a coarse porous supporting body made of a metallic material which is forming the third layer, and subsequently, is sintered in a second step.

7. The method according to claim 6, **characterized in that** the suspension containing metal oxide is applied by spraying.

8. The method according to one of claim 6 or 7, **characterized in that** the existing layer is produced by spraying a suspension containing sinterable materials, and subsequently sintering the same.

9. The method according to one of claims 6 through 8, **characterized in that** the existing layer is smoothed mechanically before the first layer is applied.

10. The method according to one of claims 6 through 9, **characterized in that** the suspension comprising metal oxide further comprises solvents, binding agents, stabilizers, and/or dispersing agents.

11. The method according to one of claims 6 through 10, **characterized in that** the solvent is selected from a group comprising water, methanol, ethanol, isopropanol, terpenes, C₂-C₅-alkenes, toluene, trichlorethylene, diethyl ether, and/or C₁-C₆-aldehydes, and/or ketones.

12. The method according to one of claims 6 through 11, **characterized in that** the binding agent is selected from a group comprising polyvinyl acetates, waxes, shellac, polyethylene oxides, and/or polyglycoles.

13. The method according to one of claims 6 through 12, **characterized in that** the stabilizer is selected from a group comprising organic and/or inorganic acids, inorganic lyes, polyacrylamides, polyacryl acids, and/or amines.

14. The method according to one of claims 6 through 13, **characterized in that** the dispersing agent is selected from a group comprising polyamines, phthalic ester, and/or polyethylene imines.

15. Use of a graduated filter according to any of claims 1 through 5, for filtration of coolants, lubricants and purifying agents, for extra-fine separation of catalyst particles, in membrane reactors, as filtering candle and/or filtering tube, in food and beverage industries, laboratory technology, medicine technology, environmental technology and/or as cross-flow-filter for micro or ultra filtration.

## Revendications

1. Filtre à structure graduée, fabriqué à partir d'une matière frittable, constitué d'au moins trois couches présentant des tailles de pores différentes, dans lequel une première couche présente une taille de pores comprise dans une gamme allant de 0,01 µm à environ 1 µm et une épaisseur de couche comprise dans une gamme allant d'environ 0,5 à 50 µm et est fabriquée à partir d'oxyde métallique ou de mélanges de ceux-ci, dans lequel la deuxième couche est fabriquée à partir d'une matière métallique et présente une épaisseur de couche comprise dans une gamme allant de 5 à 300 µm, et dans lequel la troisième couche se compose d'un corps de support à pores de grande taille constitué d'une matière métallique, dans lequel la profondeur de pénétration de la matière d'oxyde métallique de la première couche dans la deuxième couche se situe dans une gamme allant d'une à cinq couches de pores et la taille des pores de la première couche vaut 1/3 à 1/6 de celle de la deuxième couche.

2. Filtre à structure graduée selon la revendication 1, **caractérisé en ce que** la première couche présente une taille de pores comprise dans une gamme allant d'environ 0,05 µm à 0,6 µm.

3. Filtre à structure graduée selon l'une quelconque des revendications précédentes, **caractérisé en ce que** l'oxyde métallique ou les mélanges de ceux-ci sont sélectionnés dans un groupe comprenant les oxydes métalliques réductibles et/ou difficilement réductibles.

4. Filtre à structure graduée selon l'une quelconque des revendications précédentes, **caractérisé en ce que** l'oxyde métallique ou les mélanges de ceux-ci sont des oxydes difficilement réductibles, sélectionnés dans un groupe comprenant TiO₂, Al₂O₃, ZrO₂ , Cr₂O₃, CaO, MgO et/ou SiO₂.

5. Filtre à structure graduée selon l'une quelconque des revendications 1 à 4, **caractérisé en ce que** l'oxyde métallique ou les mélanges de ceux-ci sont des oxydes réductibles, sélectionnés dans un groupe comprenant AgO, CuO, Cu₂O, Fe₂O₃ et/ou NiO.

6. Procédé de fabrication d'un filtre à structure graduée constitué d'au moins trois couches selon l'une quelconque des revendications 1 à 5, dans lequel on dépose au cours d'une première étape une suspension contenant de l'oxyde métallique, avec une viscosité comprise dans une gamme allant de 0,003 à 0,96 Pas sur une couche existante constituée d'une matière métallique qui est en liaison avec un corps de support constitué d'une matière métallique à pores de grande taille formant la troisième couche, et on la fritte ensuite au cours d'une deuxième étape.

7. Procédé selon la revendication 6, **caractérisé en ce que** le dépôt de la suspension contenant de l'oxyde métallique est effectué par pulvérisation.

8. Procédé selon l'une quelconque des revendications 6 ou 7, **caractérisé en ce que** la couche déjà existante est produite par pulvérisation d'une suspension contenant des matières frittables et ensuite par frittage de celles-ci.

9. Procédé selon l'une quelconque des revendications 6 à 8, **caractérisé en ce que** la couche existante est lissée par voie mécanique avant le dépôt de la première couche.

10. Procédé selon l'une quelconque des revendications 6 à 9, **caractérisé en ce que** la suspension contenant de l'oxyde métallique comprend en outre un solvant, un liant, un stabilisant et/ou un dispersant.

11. Procédé selon l'une quelconque des revendications 6 à 10, **caractérisé en ce que** le solvant est sélectionné dans un groupe comprenant l'eau, le méthanol, l'éthanol, l'isopropanol, le terpène, des alkènes C₂-C₅, le toluène, le trichloréthylène, le diéthyléther et/ou des aldéhydes C₁-C₆ et/ou des cétones.

12. Procédé selon l'une quelconque des revendications 6 à 11, **caractérisé en ce que** le liant est sélectionné dans un groupe comprenant les acétates de polyvinyle, les cires, les gommes-laques, les oxydes de polyéthylène et/ou les polyglycols.

13. Procédé selon l'une quelconque des revendications 6 à 12, **caractérisé en ce que** le stabilisant est sélectionné dans un groupe comprenant des acides organiques et/ou minéraux, des lessives alcalines minérales, des polyacrylamides, des acides polyacryliques et/ou des amines.

14. Procédé selon l'une quelconque des revendications 6 à 13, **caractérisé en ce que** le dispersant est sélectionné dans un groupe comprenant des polyamines, des esters de l'acide phtalique et/ou des polyéthylènes imines.

15. Utilisation d'un filtre à structure graduée selon l'une quelconque des revendications 1 à 5 pour la filtration de liquides de refroidissement, de lubrification ou de nettoyage, pour la séparation très fine de particules de catalyseurs, dans des réacteurs à membrane, comme bougies filtrantes et/ou tubes filtrants, dans l'industrie alimentaire et des boissons, la technique de laboratoire, la technique médicale, la technique environnementale et/ou comme filtre à courants croisés pour la microfiltration ou l'ultrafiltration.
